Europäisches Patentamt

European Patent Office

Office européen des brevets

(11) Numéro de publication: **0 517 580 B1**

(12) **FASCICULE DE BREVET EUROPEEN**

(45) Date de publication du fascicule du brevet: **30.08.95** (51) Int. Cl.6: **C01B 25/46**, C23F 3/03

(21) Numéro de dépôt: **92401507.6**

(22) Date de dépôt: **03.06.92**

(54) **Procédé de purification et de récupération d'acide orthophosphorique par extraction liquide-liquide.**

(30) Priorité: **04.06.91 FR 9106738**

(43) Date de publication de la demande:
**09.12.92 Bulletin 92/50**

(45) Mention de la délivrance du brevet:
**30.08.95 Bulletin 95/35**

(84) Etats contractants désignés:
**AT BE CH DE ES FR GB GR IT LI NL SE**

(56) Documents cités:
**EP-A- 0 342 097       FR-A- 1 509 607**
**FR-A- 1 531 487       FR-A- 2 039 917**
**FR-A- 2 545 076       GB-A- 2 040 274**

(73) Titulaire: **COMMISSARIAT A L'ENERGIE ATO-MIOUE**
**31-33, rue de la Fédération**
**F-75015 Paris (FR)**

Titulaire: **GRAPHOCOLOR S.A.**
**19 Avenue des Vieux Moulins**
**F-74000 Annecy (FR)**

(72) Inventeur: **Lanoe, Jean-Yves**
**8 Domaine de Paniscoule**
**F-30200 Bagnols sur Ceze (FR)**
Inventeur: **Malaterre, Roger**
**Ouartier Bransas - RN 86**
**F-07700 Saint Marcel d'Ardeche (FR)**
Inventeur: **Morin, Michel**
**5 rue de la Flûte**
**F-84800 l'Isle-sur-la-Sorque (FR)**

(74) Mandataire: **Des Termes, Monique et al**
**Société Brevatome**
**25, rue de Ponthieu**
**F-75008 Paris (FR)**

Rank Xerox (UK) Business Services
(3.10/3.09/3.3.3)

## Description

La présente invention a pour objet un procédé pour purifier et récupérer l'acide orthophosphorique contenu soit dans des bains aqueux de traitement de surface (décapage, brillantage de pièces d'aluminium), soit dans des solutions aqueuses issues d'installations industrielles.

Ce procédé a en particulier pour but de minimiser la présence de sulfates dans la solution acide produite. Il permet la récupération d'acide orthophosphorique $H_3PO_4$ débarrassé de la majeure partie des impuretés contenues dans les bains et solutions aqueuses à traiter. Ces impuretés sont généralement présentes sous forme de cations (Al, Fe, ...) ou d'anions ($SO_4^=$, $NO_3^-$, ...). L'acide ainsi récupéré et purifié peut alors être réinjecté dans des installations l'utilisant comme réactif chimique telles que les installations de brillantage.

Les procédés actuellement connus de purification et de récupération d'acide orthophosphorique par extraction liquide-liquide, communément mis en oeuvre dans les installations industrielles, comportent une étape d'extraction d'$H_3PO_4$ consistant à mettre la solution aqueuse à traiter en contact avec un solvant organique tel que le phosphate de tri-n-butyle pur (TBP) ou l'isobutanol puis une étape de réextraction consistant à mettre le solvant organique chargé en $H_3PO_4$ au contact d'une solution aqueuse de réextraction.

Ces contacts liquide-liquide sont réalisés à contre-courant dans des extracteurs qui peuvent être avantageusement du type "colonnes pulsées".

Ces solvants d'extraction préconisés présentent cependant un certain nombre d'inconvénients.

En effet, le TBP utilisé pur possède une densité proche de celle de l'eau et il en résulte que le système TBP-phase aqueuse a tendance à former des émulsions difficilement décantables ; ceci conduit à faire fonctionner les colonnes d'extraction dans des conditions de débit et d'agitation telles que, pour éviter leur engorgement, l'efficacité et la capacité de traitement de ces colonnes sont médiocres, voire mauvaises.

Pour améliorer l'hydrodynamique des liquides dans les colonnes d'extraction, on est alors obligé de travailler à des températures légèrement supérieures à la température ambiante, ce qui rend l'extraction plus difficile.

L'isobutanol quant à lui, présente une solubilité élevée dans les phases aqueuses, ce qui oblige de le récupérer dans le raffinat d'extraction par des opérations annexes telles que le stripping à la vapeur par exemple ; ceci complique notablement les installations et en augmente le coût d'investissement.

Si l'on désire récupérer sous forme d'acide orthophosphorique la totalité des ions phosphates présents en solution, il est nécessaire d'additionner celle-ci d'un acide fort qui a pour effet de :

- transformer les phosphates en acide orthophosphorique,
- limiter la dissociation de ce dernier en favorisant la formation de l'espèce moléculaire $H_3PO_4$ seule extractible.

Ce résultat est habituellement obtenu par addition d'acide sulfurique (plus fort que l'acide orthophosphorique). Il a cependant pour inconvénient qu'une partie de cet acide sulfurique est extraite avec l'acide orthophosphorique et doit donc être éliminée par un lavage de la phase organique chargée, à l'aide d'une solution aqueuse appropriée.

Toutefois, la sélectivité de l'isobutanol vis-à-vis de $H_3PO_4$ est trop faible pour permettre la séparation acide sulfurique-acide orthophosphorique par ce moyen.

En revanche, cette opération de lavage est possible avec le TBP qui offre une sélectivité de séparation de l'acide orthophosphorique par rapport à l'acide sulfurique plus grande que celle offerte par l'isobutanol.

L'invention a justement pour objet un procédé de purification et de récupération d'acide orthophosphorique permettant notamment de remédier aux inconvénients ci-dessus. En particulier, il permet d'augmenter notablement la capacité de traitement des actuelles installations industrielles (de l'ordre de 60%) et de supprimer les opérations annexes nécessitées en particulier par l'emploi de l'isobutanol. Il permet en outre, lors de l'utilisation éventuelle d'acide sulfurique, la séparation de cet acide et de l'acide orthophosphorique.

De façon plus précise, l'invention a pour objet un procédé de purification et de récupération d'acide orthophosphorique présent dans une solution aqueuse à traiter, consitant à :

a) - mettre, dans une colonne d'extraction, la solution aqueuse à traiter en contact avec un solvant organique d'extraction de l'acide orthophosphorique contenant essentiellement un trialkylphosphate et un hydrocarbure saturé liquide,

b) - laver, dans une colonne de lavage, le solvant chargé en acide orthophosphorique avec une solution aqueuse de lavage,

c) - réinjecter la solution de lavage sortant de la colonne de lavage dans la colonne d'extraction à l'endroit où les concentrations d'acide orthophosphorique respectivement dans la solution de lavage et la solution à traiter sont identiques, et

d) - mettre, dans une colonne de réextraction, le solvant chargé et lavé en contact avec une solution aqueuse de réextraction capable de réextraire l'acide orthophosphorique ainsi purifié.

De préférence, les solutions aqueuses et le solvant organique sont mis en contact à contre-courant mais la mise en contact à co-courant est possible.

Pour obtenir une extraction aussi complète que possible, un acide fort, et en particulier de l'acide sulfurique, est injecté dans la partie basse de la colonne d'extraction, de façon à transformer et à décomplexer les sels de l'acide orthophosphorique (phosphates et hydrogénophosphates) en acide phosphorique.

L'injection d'acide sulfurique est effectuée dans la colonne d'extraction là où se trouve essentiellement les phosphates et entre autres l'espèce $H_2PO_4^-$, forme non extractible par le solvant organique.

Le trialkylphosphate utilisé est en général le tri-n-butylphosphate ou le triisobutylphosphate (TIBP) du fait de leur bon pouvoir d'extraction.

Dans les diverses opérations a, b, c et d, on souhaite éviter la formation d'émulsions difficiles à décanter et qui nuiraient au fonctionnement hydrodynamique des colonnes pulsées. Pour y parvenir, il convient de veiller à ce que la phase organique soit plus légère que la phase aqueuse. C'est la raison pour laquelle on doit diluer le trialkylphosphate (densité de 0,97 pour le TBP) pur par un hydrocarbure liquide moins dense (densité de 0,75 pour le dodécane).

On ne peut cependant pas trop diluer l'extractant trialkylphosphate car il faut éviter le risque de démixtion de la phase organique en présence d'acide fort (sulfurique notamment), et conserver au solvant organique un pouvoir extractant suffisant vis-à-vis de l'acide orthophosphorique. Au-dessus de 30% en volume de diluant, il y a demixtion et formation d'une troisième phase.

Dans la pratique, on peut diluer le trialkylphosphate jusqu'à ce qu'il représente 80% en volume du mélange sans courir ces risques, typiquement le solvant contient de 80 à 90% en volume de trialkylphosphate. Le diluant employé peut être un hydrocarbure cyclique ou aromatique de 8 à 14 atomes de carbone mais c'est de préférence un hydrocarbure aliphatique saturé en $C_8$ à $C_{12}$ tel qu'un dodécane ou le tétrapropylène hydrogéné (TPH).

On diminue ainsi la densité et la viscosité du solvant organique tout en augmentant sa tension interfaciale avec les solutions aqueuses en contact. Il n'est alors plus nécessaire d'opérer à chaud pour avoir un bon fonctionnement hydraulique des contacts d'extraction (colonnes pulsées par exemple). Ainsi, l'extraction peut avoir lieu à température ambiante (25 °C), ce qui en réduit son coût.

Dans ces conditions de dilution du trialkylphosphate et de température, la solution aqueuse de lavage peut être tout simplement de l'eau, déminéralisée de préférence. On peut éventuellement utiliser une fraction de l'acide orthophosphorique purifié produite. L'eau a l'avantage d'être un bon agent décontaminant, ce qui permet de l'utiliser en plus faible quantité qu'un autre agent de lavage.

L'étape de lavage permet en effet de débarrasser l'acide orthophosphorique extrait de l'acide sulfurique qui l'a en partie accompagné. On obtient donc après réextraction un acide orthophosphorique plus pur que celui que fournissait l'art antérieur sans lavage.

Le fait de réinjecter la solution de lavage dans la colonne d'extraction, selon l'invention, à un niveau où les concentrations d'acide orthophosphorique respectives dans la solution de lavage et la solution à traiter sont identiques, permet de ne pas perturber l'opération d'extraction.

En outre, ceci permet d'optimiser la consommation d'acide sulfurique en utilisant la première acidité forte de l'acide sulfurique uniquement là où elle est nécessaire.

En réinjectant la solution aqueuse issue du lavage dans la colonne d'extraction, on fait refluer vers celle-ci l'acide sulfurique contenu, minimisant ainsi la quantité de $H_2SO_4$ à y introduire pour optimiser l'extraction de l'acide orthophosphorique. Il est avantageux pour le rendement d'extraction que l'ajout d'acide sulfurique s'effectue sous un faible volume ; aussi emploie-t-on, de préférence, de l'acide sulfurique concentré.

Le procédé de l'invention présente un grand intérêt dans les procédés de brillantage de pièces en aluminium. En effet, il permet en plus de la récupération de l'acide orthophosphorique contenu dans les bains de brillantage, le recyclage de cet acide dans l'installation, sans y ajouter d'agent tensio-actif.

Le procédé de l'invention peut être mis en oeuvre, de façon simple, dans les installations industrielles existantes.

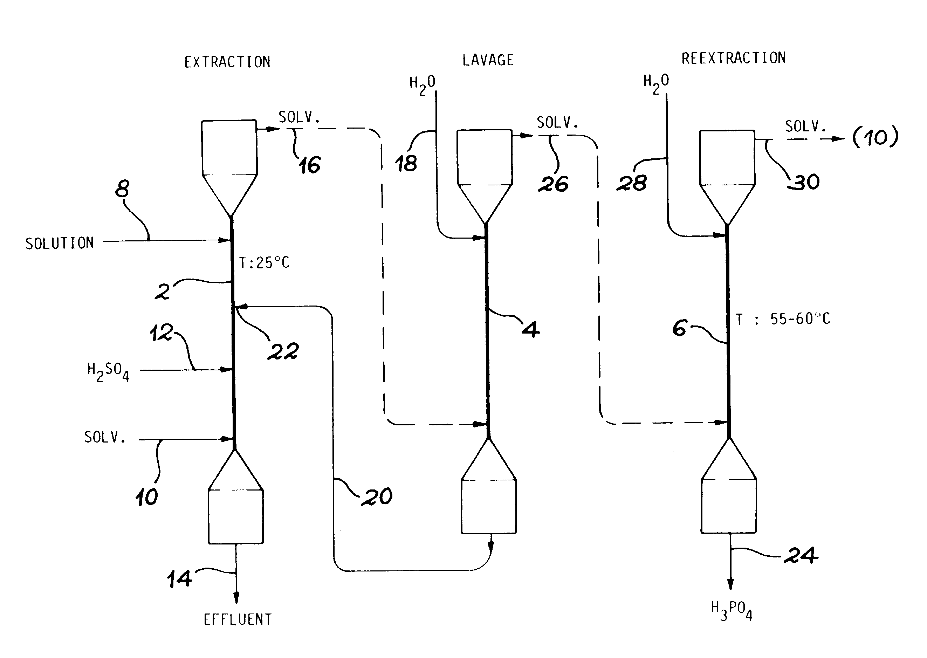

D'autres caractéristiques et avantages de l'invention ressortiront mieux de la description qui va suivre, donnée à titre illustratif et non limitatif, en référence à l'unique figure annexée qui représente schématiquement le dispositif de mise en oeuvre du procédé conforme à l'invention.

Ce dispositif comporte trois appareils 2, 4 et 6 d'extraction liquide-liquide du type colonne pulsée, destinés respectivement à l'extraction de l'acide orthophosphorique, au lavage du solvant d'extraction chargé et à la réextraction de l'acide orthophosphorique.

L'acide orthophosphorique contenu dans la solution à traiter se présente généralement sous forme de phosphates ou d'hydrogénophosphates, composés non extractibles.

La solution à traiter est introduite en 8 en tête de la colonne d'extraction 2 dans laquelle l'acide orthophosphorique est extrait à contre-courant du solvant organique d'extraction introduit à la base du fût de la colonne 2 au point 10.

Au point 12 et au-dessus de l'injection du solvant organique, on effectue une injection d'acide sulfurique concentré à 95% en volume. Cette injection est optimisée du point de vue position altimétrique dans la colonne 2 et du point de vue quantité injectée, pour extraire quantitativement l'acide orthophosphorique sous forme moléculaire $H_3PO_4$ et obtenir des rendements de récupération allant jusqu'à 98%. La position de l'injection et la quantité injectée sont directement liées à la concentration en ions phosphates et au débit de la solution à traiter

Le solvant est un mélange de TBP et d'un diluant constitué d'hydrocarbure saturé, aliphatique ou cyclique en $C_8$ à $C_{12}$, ce qui permet d'augmenter d'un facteur voisin de 2 la capacité des appareils, par rapport à l'utilisation du TBP pur. Le choix du diluant et le dosage du mélange sont faits de telle sorte que ce dernier ne démixte pas en présence d'acide sulfurique concentré.

En particulier, ce mélange contient 80% en volume de TBP et 20% en volume de tétrapropylène hydrogéné ou de dodécane.

Dans ces conditions, l'opération d'extraction de l'acide orthophosphorique par le TBP peut être conduite à la température ambiante, de l'ordre de 25°C.

Les effluents sortant en 14, au pied de la colonne d'extraction 2, contiennent essentiellement de l'acide sulfurique à éliminer.

Le solvant organique chargé en acide orthophosphorique sortant en 16, en haut de la colonne d'extraction 2, est traité à contre-courant dans la colonne de lavage 4 par de l'eau déminéralisée introduite en 18 en haut de la colonne de lavage 4. Ceci permet, lorsque cela est nécessaire de refluer sélectivement l'acide sulfurique, co-extrait, vers la colonne d'extraction 2 et ainsi de décontaminer l'acide orthophosphorique de l'acide sulfurique qu'il contient. Ce lavage est effectué à température ambiante.

L'originalité de cette opération consiste à renvoyer le flux 20, sortant en pied de colonne de lavage 4 et qui contient une quantité d'acide sulfurique importante, dans le fût de la colonne d'extraction 2 à l'endroit précis 22 où la concentration en acide orthophosphorique dans la phase aqueuse à traiter est égale à celle dudit flux 20.

Il en résulte globalement, c'est-à-dire en ce qui concerne l'ensemble extraction plus lavage, une décontamination en acide sulfurique meilleure qu'avec un système où le flux 20 serait réinjecté en tête d'extraction. Le point de réinjection 22 se situe pratiquement aux 2/3 supérieurs de la colonne d'extraction 2.

Le solvant chargé et désulfaté sortant en 26 au sommet de la colonne de lavage 4 est ensuite mis en contact, dans la colonne 6, à contre-courant avec de l'eau introduite en tête de colonne en 28. Cette réextraction de l'acide orthophosphorique est effectuée à une température de 55 à 60°C.

Cette opération de réextraction peut être réalisée avec un rapport de débit eau/solvant permettant un facteur de concentration en acide orthophosphorique de l'ordre de 4.

Le solvant déchargé sortant en 30, en haut de la colonne de réextraction 6, a une acidité résiduelle inférieure à $10^{-3}N$ et peut donc être recyclé tel quel en pied de colonne d'extraction en 10. Quant à la solution d'acide orthophosphorique purifiée sortant en 24, celle-ci peut être recyclée dans les installations de traitement de surface après concentration dans un évaporateur, sans y ajouter d'agent tensio-actif.

On donne ci-après, un exemple de mise en oeuvre du procédé conforme à l'invention.

## EXEMPLE

Dans une installation analogue à celle de la figure annexée, on a traité une solution résiduaire provenant d'un atelier de brillantage de pièces d'aluminium. La composition de la solution à traiter est la suivante :

$PO_4^{3-}$ : 850 g/l $\quad$ $NO_3^-$ : 21 g/l
$SO_4^{2-}$ : 83 g/l $\quad$ Al : 28,4 g/l
pH = 0

Le solvant organique est envoyé en 10 à un débit égal à 13,5 fois celui de la solution à traiter injectée en 8.

Le débit d'eau de lavage introduite en 18 est égal à 0,04 fois le débit de solvant introduit en 10.

Les opérations d'extraction et de lavage sont réalisées à une température de 24°C et l'opération de réextraction à une température de 60°C.

Le taux de récupération obtenu en phosphates totaux est de 98% pour un débit d'acide sulfurique 95%, injecté en 13, égal à 0,12 fois le débit de la solution à traiter injectée en 8.

La solution produite en 24 a la composition suivante :

$PO_4^{3-}$ : 215 g/l $\quad$ $NO_3^-$ : 3,8 g/l
$SO_4^{2-}$ : 8,8 g/l $\quad$ Al : 23 mg/l

On voit que le rapport phosphate/sulfate dans la solution produite en 24 est de l'ordre de 25 pour un rapport voisin de 10 dans la solution de départ.

**Revendications**

1. Procédé de purification et de récupération d'acide orthophosphorique présent dans une solution aqueuse à traiter, consistant à :

a) - mettre, dans une colonne d'extraction (2), la solution aqueuse (8) à traiter en contact avec un solvant organique (10) d'extraction de l'acide orthophosphorique contenant essentiellement un trialkylphosphate et un hydrocarbure saturé liquide,

b) - laver, dans une colonne de lavage (4), le solvant chargé en acide orthophosphorique (16) avec une solution aqueuse de lavage (18),

c) - réinjecter (22) la solution de lavage (20) sortant de la colonne de lavage dans la colonne d'extraction (2) à l'endroit (22) où les concentrations d'acide orthophosphorique respectivement dans la solution de lavage (20) et la solution à traiter (8) sont identiques, et

d) - mettre, dans une colonne de réextraction (6), le solvant chargé et lavé (26) en contact avec une solution aqueuse (28) de réextraction capable de réextraire (24) l'acide orthophosphorique ainsi purifié.

2. Procédé selon la revendication 1, caractérisé en ce que la réinjection de la solution de lavage (18) est effectuée dans la colonne d'extraction aux deux tiers supérieurs de la colonne d'extraction.

3. Procédé selon l'une quelconque des revendications 1 ou 2, caractérisé en ce que l'on injecte (12) un acide fort dans la partie basse de la colonne d'extraction.

4. Procédé selon la revendication 3, caractérisé en ce que l'acide fort est l'acide sulfurique concentré.

5. Procédé selon la revendications 3 ou 4, caractérisé en ce que la concentration en trialkylphosphate et en hydrocarbure dans le solvant organique est telle qu'il n'y ait pas démixtion en présence de l'acide fort.

6. Procédé selon l'une quelconque des revendications 1 à 5, caractérisé en ce que le solvant organique contient 80% de trialkylphosphate et 20% d'hydrocarbure, en volume.

7. Procédé selon l'une quelconque des revendications 1 à 6, caractérisé en ce que l'hydrocarbure est choisi parmi le tétrapropylène hydrogéné (TPH) et le dodécane.

8. Procédé selon l'une quelconque des revendications 1 à 7, caractérisé en ce que le trialkylphophate est le tri-n-butylphosphate (TBP).

9. Procédé selon l'une quelconque des revendications 1 à 8, caractérisé en ce que l'étape d'extraction est effectuée à température ambiante.

10. Procédé selon l'une quelconque des revendications 1 à 9, caractérisé en ce que l'étape de réextraction est effectuée à une température de 55°C à 60°C.

11. Procédé selon l'une quelconque des revendications 1 à 10, caractérisé en ce que la solution de lavage consiste en de l'eau déminéralisée.

12. Procédé selon l'une quelconque des revendications 1 à 11, caractérisé en ce que le solvant organique et les solutions aqueuses sont mis en contact à contre-courant.

13. Procédé de purification d'une solution aqueuse d'acide orthophosphorique utilisée dans une installation de traitement de surface, caractérisé en ce qu'on utilise le procédé selon l'une quelconque des revendications 1 à 12 et en ce qu'on recycle la solution aqueuse purifiée en tête de l'installation, sans y ajouter d'agent tensio-actif.

**Claims**

1. A method for purifying and recovering orthophosphoric acid present in an aqueous solution requiring treatment, comprising:

a) placing the aqueous solution (8) requiring treatment in contact with an organic solvent (10) for extracting orthophosphoric acid containing essentially a trialkyl phosphate and a liquid saturated hydrocarbon in an extraction column (2),

b) washing the solvent containing orthophosphoric acid (16) with an aqueous washing solution (18) in a wash column (4),

c) reinjecting (22) the wash solution (20) leaving the wash column into the extraction column (2) at the location (22) where the concentrations of orthophosphoric acid in the wash solution (20) and the solution requiring treatment (8) respectively are identical, and

d) placing the laden and washed solvent (26) in contact with an aqueous reextraction solution (28) capable of reextracting (24) the orthophosphoric acid thus purified, in a reextraction column (6).

2. A method according to claim 1, characterised in that reinjection of the wash solution (18) into the extraction column takes place in the upper two thirds of the extraction column.

3. A method according to either of claims 1 or 2, characterised in that a strong acid is injected (12) into the lower part of the extraction column.

4. A method according to claim 3, characterized in that the strong acid is concentrated sulphuric acid.

5. A method according to claims 3 or 4, characterized in that the trialkylphosphate and hydrocarbon concentration in the organic solvent is such that there is no unmixing in the presence of the strong acid.

6. A method according to any one of claims 1 to 5, characterized in that the organic solvent contains 80% of trialkyl phosphate and 20% of hydrocarbon by volume.

7. A method according to any one of claims 1 to 6, characterized in that the hydrocarbon is selected from hydrogenated tetrapropylene (HTP) and dodecane.

8. A method according to any one of claims 1 to 7, characterized in that the trialkyl phosphate is tri-n-butyl phosphate (TBP).

9. A method according to any one of claims 1 to 8, characterized in that the extraction stage is performed at ambient temperature.

10. A method according to any one of claims 1 to 9, characterized in that the reextraction stage is performed at a temperature from 55°C to 60°C.

11. A method according to any one of claims 1 to 10, characterized in that the wash solution comprises demineralised water.

12. A method according to any one of claims 1 to 11, characterized in that the organic solvent and the aqueous solutions are placed in countercurrent contact.

13. A method for purifying an aqueous solution of orthophosphoric acid used in a surface treatment installation, characterized in that the method according to any one of claims 1 to 12 is used and in that the purified aqueous solution is recycled to the start of the installation without the addition of surfactant.

**Patentansprüche**

1. Verfahren zur Reinigung und Rückgewinnung von Orthophosphorsäure, die in einer zu behandelnden wäßrigen Lösung vorhanden ist, umfassend das:

a) Zusammenbringen der zu behandelnden wäßrigen Lösung (8) in einer Extraktionskolonne (2) mit einem organischen Lösungsmittel (10) zur Extraktion der Orthophosphorsäure, welches im wesentlichen ein Trialkylphosphat und einen flüssigen gesättigten Kohlenwasserstoff enthält,

b) Waschen des mit Orthophosphorsäure beladenen Lösungsmittels (16) in einer Waschkolonne (4) mit einer wäßrigen Waschlösung (18),

c) Rückführen (22) der Waschlösung (20), welche die Waschkolonne verläßt, in die Extraktionskolonne (2) an der Stelle (22), wo die Konzentrationen an Orthophosphorsäure in der Waschlösung (20) bzw. in der zu behandelnden Lösung (8) identisch sind, und

d) Zusammenbringen des beladenen und gewaschenen Lösungsmittels (26) in einer Rückextraktionskolonne (6) mit einer wäßrigen Rückextraktionslösung (28), welche die so gereinigte Orthophosphorsäure rückextrahieren kann (24).

2. Verfahren nach Anspruch 1, **dadurch gekennzeichnet**, daß die Rückführung der Waschlösung (18) in die Extraktionskolonne in den beiden oberen Dritteln der Extraktionskolonne erfolgt.

3. Verfahren nach einem der Ansprüche 1 oder 2, **dadurch gekennzeichnet**, daß eine starke Säure in den unteren Teil der Extraktionskolonne eingespritzt wird (12).

4. Verfahren nach Anspruch 3, **dadurch gekennzeichnet**, daß die starke Säure konzentrierte Schwefelsäure ist.

5. Verfahren nach den Ansprüchen 3 oder 4, **dadurch gekennzeichnet**, daß die Konzentration von Trialkylphosphat und von Kohlenwasserstoff in dem organischen Lösungsmittel so ist, daß es keine Entmischung in Gegenwart der starken Säure gibt.

6. Verfahren nach einem der Ansprüche 1 bis 5, **dadurch gekennzeichnet**, daß das organische Lösungsmittel 80% Trialkylphosphat und 20% Kohlenwasserstoff, bezogen auf das Volumen, enthält.

6

**7.** Verfahren nach einem der Ansprüche 1 bis 6, **dadurch gekennzeichnet**, daß der Kohlenwasserstoff aus hydriertem Tetrapropylen (TPH) und Dodecan gewählt wird.

**8.** Verfahren nach einem der Ansprüche 1 bis 7, **dadurch gekennzeichnet**, daß das Trialkylphosphat Tri-n-butylphosphat (TBP) ist.

**9.** Verfahren nach einem der Ansprüche 1 bis 8, **dadurch gekennzeichnet**, daß der Extraktionsschritt bei Raumtemperatur ausgeführt wird.

**10.** Verfahren nach einem der Ansprüche 1 bis 9, **dadurch gekennzeichnet**, daß der Rückextraktionsschritt bei einer Temperatur von 55°C bis 60°C ausgeführt wird.

**11.** Verfahren nach einem der Ansprüche 1 bis 10, **dadurch gekennzeichnet**, daß die Waschlösung aus entmineralisiertem Wasser besteht.

**12.** Verfahren nach einem der Ansprüche 1 bis 11, **dadurch gekennzeichnet**, daß das organische Lösungsmittel und die wäßrigen Lösungen im Gegenstrom zusammengebracht werden.

**13.** Verfahren zur Reinigung einer wäßrigen Lösung von Orthophosphorsäure, welche in einer Anlage zur Oberflächenbehandlung verwendet wird, **dadurch gekennzeichnet**, daß das Verfahren nach einem der Ansprüche 1 bis 12 verwendet wird, und daß die gereinigte wäßrige Lösung zum Anfang der Anlage zurückgeführt wird, ohne ihr ein oberflächenaktives Mittel zuzusetzen.